(19) **Europäisches Patentamt / European Patent Office / Office européen des brevets**

(11) **EP 3 211 275 B1**

(12) **EUROPEAN PATENT SPECIFICATION**

(45) Date of publication and mention of the grant of the patent:
**10.04.2019 Bulletin 2019/15**

(51) Int Cl.:
**F16H 61/4192** *(2010.01)* **F15B 19/00** *(2006.01)*

(21) Application number: **16199682.2**

(22) Date of filing: **18.11.2016**

(54) **METHOD AND SYSTEM FOR DIAGNOSING HYDRAULIC MACHINE, HYDRAULIC MACHINE, AND RENEWABLE-ENERGY TYPE POWER GENERATING APPARATUS**

VERFAHREN UND SYSTEM ZUR DIAGNOSE EINER HYDRAULISCHEN MASCHINE, HYDRAULISCHE MASCHINE UND LEISTUNGSERZEUGUNGSVORRICHTUNG FÜR ERNEUERBARE ENERGIE

PROCÉDÉ ET SYSTÈME DE DIAGNOSTIC POUR MACHINE HYDRAULIQUE, MACHINE HYDRAULIQUE ET GÉNÉRATEUR DE PUISSANCE DE TYPE À ÉNERGIE RENOUVELABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2016 JP 2016035548**

(43) Date of publication of application:
**30.08.2017 Bulletin 2017/35**

(73) Proprietor: **Mitsubishi Heavy Industries, Ltd.**
**Tokyo 108-8215 (JP)**

(72) Inventors:
• **Hayashi, Toshikazu**
  **Tokyo, 108-8215 (JP)**
• **Yuge, Atsushi**
  **Tokyo, 108-8215 (JP)**
• **Nomaguchi, Hiroyuki**
  **Tokyo, 108-8215 (JP)**
• **Kagimoto, Yoshimi**
  **Tokyo, 108-8215 (JP)**
• **Takeuchi, Hiroaki**
  **Tokyo, 108-8215 (JP)**
• **Hirano, Haruhiko**
  **Tokyo, 108-8215 (JP)**

(74) Representative: **Henkel, Breuer & Partner Patentanwälte**
**Maximiliansplatz 21**
**80333 München (DE)**

(56) References cited:
**WO-A1-2014/024232 US-A1- 2004 167 738**

## Description

### TECHNICAL FIELD

The present disclosure relates to a method and a system for diagnosing a hydraulic machine, a hydraulic machine, and a renewable-energy type power generating apparatus.

### BACKGROUND ART

A hydraulic machine such as a hydraulic pump and a hydraulic motor is conventionally known.

For instance, US 2010/0040470A describes a hydraulic machine which converts fluid energy of working fluid into rotational energy of a rotor shaft, or vice versa, utilizing a cyclic volume change of a working chamber formed by a cylinder and a piston.

JP 2014-533811A discloses a hydraulic machine provided with a poppet valve as a high-pressure valve for switching a communication state between a working chamber and a high-pressure line outside the working chamber.

US 2004/167728A1 discloses a system and method for power pump performance monitoring and analysis. The system and method is based on an operating hydraulic machine and includes a signal processor connected to pressure sensors for sensing pressures in the cylinder chambers and in the inlet and discharge piping of a single or multi-cylinder pump. The respective pressure sensors sense the pressures in the respective pump chambers associated with the respective pistons and pressure signals are transmitted to the processor. The signals are indicative of the time when inlet and outlet valves to the respective pump chambers are opening and closing, respectively. If the pressure sensed in a pump chamber does not rise essentially instantly, after the piston for the chamber passes the bottom dead center by a certain range of the crank shaft rotation, this is indicative of situation that the inlet or suction valve is delayed in closing or is leaking. A similar conclusion can be drawn if the pressure for the chamber does not drop immediately to the pump inlet pressure within a certain range of the crank shaft rotation when the piston has reached the top dead center and begins its suction of fluid intake stroke.

WO 2014/024232A1 discloses a poppet valve of the basic type used in the hydraulic machine to which the method of diagnosing of the invention pertains.

### SUMMARY

In case of damage to a valve in a hydraulic machine, the damage may cause deterioration of performance of the hydraulic machine or reduction in lifetime of the hydraulic machine. To prevent performance deterioration and lifetime reduction of a hydraulic machine, it is important to detect a damage of a valve appropriately.

In view of the above, an object of at least one embodiment of the present invention is to provide a hydraulic machine, a diagnosis system for the hydraulic machine, a diagnosis method for the hydraulic machine, and a renewable-energy type power generating apparatus, whereby it is possible to detect a damage of a high-pressure valve appropriately.

The invention provides a method of diagnosing a hydraulic machine with the features of claim 1 and a diagnosis system for a hydraulic machine with the features of claim 8.

(1) A method, according to at least some embodiments of the present invention, is for diagnosing a hydraulic machine which comprises a rotor shaft, a cylinder, a piston forming a working chamber together with the cylinder, and a high-pressure valve and a low-pressure valve provided for the working chamber, and which is configured to perform conversion between rotational motion of the rotor shaft and reciprocal motion of the piston, the high-pressure valve comprising a poppet valve including a seat and a poppet configured to be in contact with the seat from a side of a high-pressure line of the hydraulic machine. The method comprises: a step of measuring a pressure of the working chamber in a state where the high-pressure valve and the low-pressure valve are closed; and a step of detecting a damage of the high-pressure valve on the basis of the pressure of the working chamber.

As a result of intensive researches by the present inventors, it was found that a condition of a damage of a high-pressure valve can affect a pressure of the working chamber measured in a state where the high-pressure valve and the low-pressure valve are closed.

According to the above method (1), on the basis of a pressure of the working chamber measured in a state where the high-pressure valve and the low-pressure valve are closed, it is possible to detect a damage of the high-pressure valve related to abrasion of the poppet.

(2) In some embodiments, in the above method (1), the poppet comprises a poppet body, an inner ridge protruding toward the seat from the poppet body, and an outer ridge disposed radially outside the inner ridge and protruding toward the seat from the poppet body. The high-pressure valve is configured to cause the high-pressure line and the working chamber to be in a non-communicating state by the inner ridge and the outer ridge of the poppet being in contact with the seat, in a state where the high-pressure valve is closed. The step of measuring the pressure comprises measuring the pressure of the working chamber while reducing a pressure of the high-pressure line, in a state where the high-pressure valve and the low-pressure valve are closed. The step of detecting a damage comprises detecting a damage of the high-pressure valve on the basis of a pressure value of the high-pressure line at the time of a start of an increase in the pressure of the working chamber.

According to the above method (2), it is possible to determine a leak pressure of the high-pressure valve on the basis of a pressure of the high-pressure line at the time of a start of an increase of a cylinder pressure measured while reducing a pressure value of the high-pressure line in a state where the high-pressure valve and the low-pressure valve are closed, and to detect a damage of the high-pressure valve related to abrasion of the poppet (inner ridge or outer ridge) appropriately on the basis of the leak pressure.

(3) In some embodiments, the above method (2) further comprises a step of detecting occurrence of a difference in an abrasion amount between the inner ridge and the outer ridge in the high-pressure valve, on the basis of a pressure of the high-pressure line at which the pressure of the working chamber begins to increase.

In the case of a poppet including an inner ridge and an outer ridge as described in the above (2), if a gap is created between the seat and one of the inner ridge or the outer ridge due to a difference in the progress of abrasion between the inner ridge and the outer ridge, the poppet may get deformed by high-pressure oil in accordance with the amount of the gap. In this case, a stress due to deformation of the poppet is generated, and a risk of fatigue failure of the poppet increases.

As a result of intensive researches, the present inventors found that, in the case of occurrence of a damage mode of the high-pressure valve such that a degree of development of abrasion is different between the inner ridge and the outer ridge, if the cylinder pressure is measured while reducing the pressure of the high-pressure line in a state where the high-pressure valve and the low-pressure valve are closed, the cylinder pressure begins to increase at a certain pressure of the high-pressure line. The reason is considered to be as follows. Reducing the pressure of the high-pressure line permits the poppet to recover from deformation due to high-pressure oil, and thereby the gap between the seat and one of the inner ridge or the outer ridge opens, which causes high-pressure oil to flow into the working chamber from the high-pressure line through the gap.

In this regard, according to the above method (3), it is possible to detect presence of occurrence of a damage mode (uneven abrasion) of the high-pressure valve such that a degree of development of abrasion is different between the inner ridge and the outer ridge, on the basis of a pressure value of the high-pressure line at the time of a start of an increase in the cylinder pressure measured while the pressure of the high-pressure line is reduced in a state where the high-pressure valve and the low-pressure valve are closed.

(4) In some embodiments, in the above method (2) or (3), the step of detecting a damage comprises evaluating a degree of damage of the high-pressure valve on the basis of the pressure value of the high-pressure line at the time of a start of an increase in the pressure of the working chamber.

According to the findings of the present inventors, the pressure value (leak pressure) of the high-pressure line at the time of a start of an increase in the cylinder pressure measured while the pressure of the high-pressure line is reduced in a state where the high-pressure valve and the low-pressure valve are closed, has a correlation with the degree of damage of the high-pressure valve (a widening amount of a gap between the poppet and the seat).

In this regard, according to the above method (4), it is possible to evaluate a degree of damage (development degree of damage) of the high-pressure valve, on the basis of the pressure value of the high-pressure line at the time of a start of an increase in the cylinder pressure measured while the pressure of the high-pressure line is reduced in a state where the high-pressure valve and the low-pressure valve are closed.

(5) In some embodiments, in the above method (1), the step of detecting a damage comprises determining that a damage exists in the high-pressure valve, on the basis of presence of an increase in the pressure of the working chamber.

According to the above method (5), it is possible to determine that a damage related to abrasion of the poppet exists in the high-pressure valve, on the basis of presence of an increase in the cylinder pressure measured in a state where the high-pressure valve and the low-pressure valve are closed.

(6) In some embodiments, in the above method (1), the step of detecting a damage comprises detecting a damage of the high-pressure valve on the basis of a ratio of a change rate of the pressure of the working chamber to a difference between a pressure of the high-pressure line and the pressure of the working chamber.

A ratio of a change rate of the cylinder pressure to a pressure differential between the pressure of the high-pressure line and the cylinder pressure represents a flow resistance in the gap between the poppet and the seat. According to the findings of the present inventors, there is a correlation between the abrasion amount of the poppet and the flow resistance.

In this regard, according to the above method (6), on the basis of a ratio of a change rate of a cylinder pressure to a pressure differential between the pressure of the high-pressure line and the cylinder pressure, which is a flow resistance, it is possible to detect a damage of the high-pressure valve related to abrasion of the poppet.

(7) In some embodiments, any one of the above methods (1) to (6) further comprises a step of, if a damage of the high-pressure valve is detected in the damage detecting step, causing the cylinder corresponding to the high-pressure valve to be in an inactive state of not generating a displacement, or replacing the high-pressure valve.

According to the above method (7), if a damage of the high-pressure valve is detected, the cylinder corresponding to the high-pressure valve is caused to be in an inactive state, or the high-pressure valve is replaced. Accordingly, it is possible to operate the hydraulic machine appropriately by inactivating or replacing a high-pressure valve that does not operate normally.

(8) A diagnosis system according to at least some embodiments of the present invention is for a hydraulic machine which comprises a rotor shaft, a cylinder, a piston forming a working chamber together with the cylinder, and a high-pressure valve and a low-pressure valve provided for the working chamber, and which is configured to perform conversion between rotational motion of the rotor shaft and reciprocal motion of the piston. The high-pressure valve comprises a poppet valve which includes a seat and a poppet configured to be in contact with the seat from a side of a high-pressure line of the hydraulic machine. The diagnosis apparatus comprises: a pressure measuring part configured to measure a pressure of the working chamber in a state where the high-pressure valve and the low-pressure valve are closed; and a damage detecting part configured to detect a damage of the high-pressure valve on the basis of the pressure of the working chamber measured by the pressure measuring part.

According to the above configuration (8), on the basis of a pressure of the working chamber measured in a state where the high-pressure valve and the low-pressure valve are closed, it is possible to detect a damage of the high-pressure valve related to abrasion of the poppet.

(9) In some embodiments, in the above configuration (8), the poppet comprises a poppet body, an inner ridge protruding toward the seat from the poppet body, and an outer ridge disposed radially outside the inner ridge and protruding toward the seat from the poppet body. The high-pressure valve is configured to cause the high-pressure line and the working chamber to be in a non-communicating state by the inner ridge and the outer ridge of the poppet being in contact with the seat, in a state where the high-pressure valve is closed. The pressure measuring part is configured to measure the pressure of the working chamber while reducing a pressure of the high-pressure line, in a state where the high-pressure valve and the low-pressure valve are closed. The damage detecting part is configured to detect a damage of the high-pressure valve on the basis of a pressure value of the high-pressure line at the time of a start of an increase in the pressure of the working chamber.

With the above configuration (9), it is possible to determine a leak pressure of the high-pressure valve on the basis of a pressure value of the high-pressure line at the time of a start of an increase of a cylinder pressure measured while reducing a pressure of the high-pressure line in a state where the high-pressure valve and the low-pressure valve are closed, and to detect a damage of the high-pressure valve related to abrasion of the poppet (inner ridge or outer ridge) appropriately on the basis of the leak pressure.

(10) In some embodiments, in the above configuration (9), the damage detecting part is configured to detect occurrence of a difference in an abrasion amount between the inner ridge and the outer ridge in the high-pressure valve, on the basis of a pressure of the high-pressure line at which the pressure of the working chamber begins to increase.

With the above configuration (10), it is possible to detect presence of occurrence of a damage mode (uneven abrasion) of the high-pressure valve such that the development degree of abrasion is different between the inner ridge and the outer ridge, on the basis of the pressure value of the high-pressure line at the time of a start of an increase in the cylinder pressure measured while the pressure of the high-pressure line is reduced in a state where the high-pressure valve and the low-pressure valve are closed.

(11) In some embodiments, in the above configuration (9) or (10), the damage detecting part is configured to evaluate a degree of damage of the high-pressure valve on the basis of the pressure value of the high-pressure line at the time of a start of an increase in the pressure of the working chamber.

According to the findings of the present inventors, the pressure value (leak pressure) of the high-pressure line at the time of a start of an increase in the cylinder pressure measured while the pressure of the high-pressure line is reduced in a state where the high-pressure valve and the low-pressure valve are closed, has a correlation with the degree of damage of the high-pressure valve (a widening amount of a gap between the poppet and the seat).

In this regard, with the above configuration (11), it is possible to evaluate a degree of damage (development degree of damage) of the high-pressure valve, on the basis of the pressure value of the high-pressure line at the time of a start of an increase in the cylinder pressure measured while the pressure of the high-pressure line is reduced in a state where the high-pressure valve and the low-pressure valve are closed.

(12) In some embodiments, in the above configuration (8), the damage detecting part is configured to determine that a damage exists in the high-pressure valve, on the basis of presence of an increase in the pressure of the working chamber.

With the above configuration (12), it is possible to determine that a damage related to abrasion of the poppet exists in the high-pressure valve, on the basis of presence of an increase in the cylinder pressure measured in a state where the high-pressure valve and the low-pressure valve are closed.

(13) In some embodiments, in the above configuration (8), the damage detecting part is configured to detect a damage of the high-pressure valve on the basis of a ratio of a change rate of the pressure of the working chamber to a difference between a pressure of the high-pressure line and the pressure of the working chamber.

A ratio of a change rate of the cylinder pressure to a pressure differential between the pressure of the high-pressure line and the cylinder pressure represents a flow resistance in the gap between the poppet and the seat. According to the findings of the present inventors, there is a correlation between the abrasion amount of the poppet and the flow resistance.

In this regard, with the above configuration (13), on the basis of a ratio of a change rate of a cylinder pressure to a pressure differential between the pressure of the high-pressure line and the cylinder pressure, which is a flow resistance, it is possible to detect a damage of the high-pressure valve related to abrasion of the poppet.

(14) A hydraulic machine according to at least some embodiments of the present invention comprises: a rotor shaft; a cylinder; a piston forming a working chamber together with the cylinder; a high-pressure valve and a low-pressure valve provided for the working chamber; and the diagnosis system for a hydraulic machine according to any one of the above (8) to (13).

With the above configuration (14), according to the principle described in the above (8), on the basis of a pressure of the working chamber measured in a state where the high-pressure valve and the low-pressure valve are closed, it is possible to detect a damage of the high-pressure valve related to abrasion of the poppet.

(15) A renewable-energy type power generating apparatus according to at least some embodiments of the present invention comprises: a rotor configured to receive renewable energy to rotate; a hydraulic pump configured to be driven by the rotor to pressurize working oil; a hydraulic motor configured to be driven by the working oil pressurized by the hydraulic pump; a high-pressure line connecting an outlet of the hydraulic pump and an inlet of the hydraulic motor; a low-pressure line connecting an outlet of the hydraulic motor and an inlet of the hydraulic pump; and a generator configured to be driven by the hydraulic motor. At least one of the hydraulic pump or the hydraulic motor is the hydraulic machine according to the above (14).

With the above configuration (15), according to the principle described in the above (8), on the basis of a pressure of the working chamber measured in a state where the high-pressure valve and the low-pressure valve are closed, it is possible to detect a damage of the high-pressure valve related to abrasion of the poppet.

An object of at least some embodiments of the present invention is to provide a hydraulic machine, a diagnosis system for a hydraulic machine, a diagnosis method for a hydraulic machine, and a renewable-energy type power generating apparatus, whereby it is possible to detect a damage of a high-pressure valve appropriately.

BRIEF DESCRIPTION OF DRAWINGS

FIG. 1 is a schematic diagram of a wind turbine power generating apparatus according to an embodiment.
FIG. 2 is a schematic configuration diagram of a hydraulic machine according to an embodiment.

FIG. 3 is a schematic diagram illustrating a configuration of a diagnosis system according to an embodiment.
FIG. 4A is a cross-sectional view of a high-pressure valve according to an embodiment.
FIG. 4B is a cross-sectional view of a high-pressure valve according to an embodiment.
FIG. 5 is an example of a result of measurement of a pressure in a pressure measuring step.
FIG. 6 is an example of a result of measurement of a pressure in a pressure measuring step.
FIGs. 7A to 7C are diagrams of a seat portion of a high-pressure valve according to an embodiment.
FIG. 8 is a graph showing an example of a correlation between a leak pressure of a high-pressure line and a gap amount between a poppet and a seat.
FIG. 9 is a graph showing an example of a correlation between a flow resistance R at a worn section and a gap amount between a poppet and a seat.
FIG. 10 is an example of a result of measurement of a pressure in a pressure measuring step.
FIG. 11 is an example of a result of measurement of a pressure in a pressure measuring step.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

First, an overall configuration of a wind turbine power generating apparatus will be described. A wind turbine power generating apparatus is an example of a renewable-energy type power generating apparatus including a hydraulic machine to which a diagnosis system and a diagnosis method according to an embodiment are to be applied.

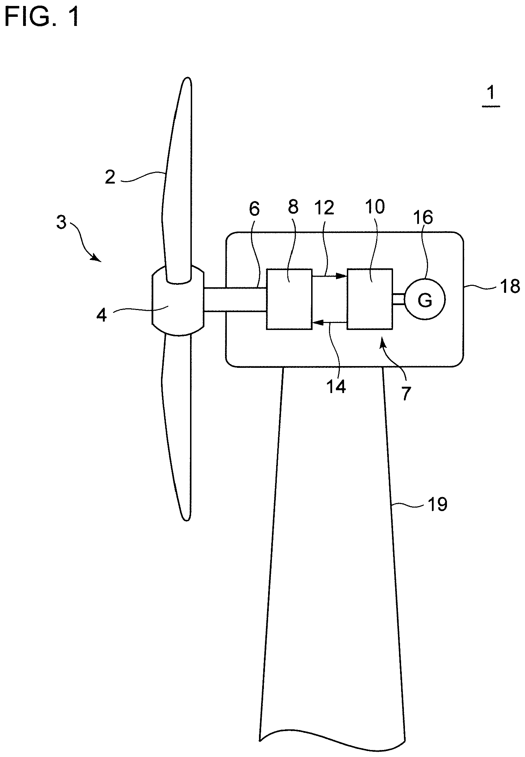

FIG. 1 is a schematic diagram of a wind turbine power generating apparatus according to an embodiment. As illustrated in the drawing, the wind turbine power generating apparatus 1 includes a rotor 3 configured to receive wind, which is a renewable energy, to rotate, a hydraulic transmission 7 for transmitting rotation of the rotor 3, and a generator 16 for generating electric power.

The rotor 3 includes at least one blade 2, and a hub 4 to which the at least one blade 2 is mounted.

The hydraulic transmission 7 includes a hydraulic pump 8 connected to the rotor 3 via a rotor shaft 6, a hydraulic motor 10, and a high-pressure line 12 and a low-pressure line 14 connecting the hydraulic pump 8 and the hydraulic motor 10. The high-pressure line 12 connects an outlet of the hydraulic pump 8 and an inlet of the hydraulic motor 10, while the low-pressure line 14 connects an outlet of the hydraulic motor 10 and an inlet of the hydraulic pump 8.

The generator 16 is coupled to the hydraulic motor 10 via an output shaft of the hydraulic motor 10. In an embodiment, the generator 16 is a synchronous generator connected to a utility grid and driven by the hydraulic motor 10.

The hydraulic pump 8, the hydraulic motor 10, and the generator 16 may be disposed inside a nacelle 18 disposed on a tower 19.

In the wind turbine power generating apparatus 1 illustrated in FIG. 1, rotational energy of the rotor 3 is inputted into the generator 16 via the hydraulic transmission 7 including the hydraulic pump 8 and the hydraulic motor 10, and electric power is generated by the generator 16.

When the at least one blade 2 receives wind, the entire rotor 3 rotates in response to the power of wind, so that the hydraulic pump 8 is driven by the rotor 3 to increase the pressure of working oil, thereby producing high-pressure working oil (pressurized oil). The pressurized oil produced by the hydraulic pump 8 is supplied to the hydraulic motor 10 via the high-pressure line 12, and drives the hydraulic motor 10. Electric power is generated by the generator 16 connected to the hydraulic motor 10 via the output shaft. The low-pressure working oil having performed work in the hydraulic motor 10 flows again into the hydraulic pump 8 via the low-pressure line 14.

The hydraulic pump 8 and the hydraulic motor 10 may be of variable-displacement type whereby the displacement is adjustable.

In some embodiments, at least one of the above described hydraulic pump 8 or the hydraulic motor 10 is a hydraulic machine 20 described below.

Next, configuration of a hydraulic machine and a diagnosis system of the hydraulic machine according to an embodiment will be described.

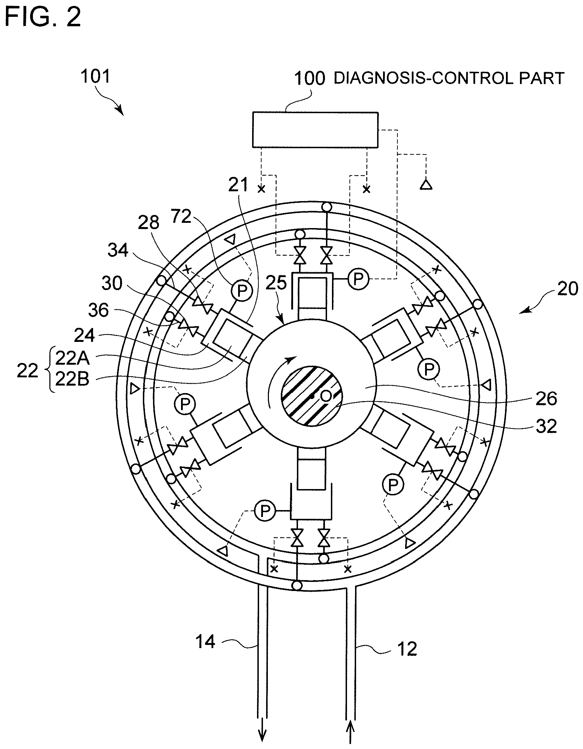

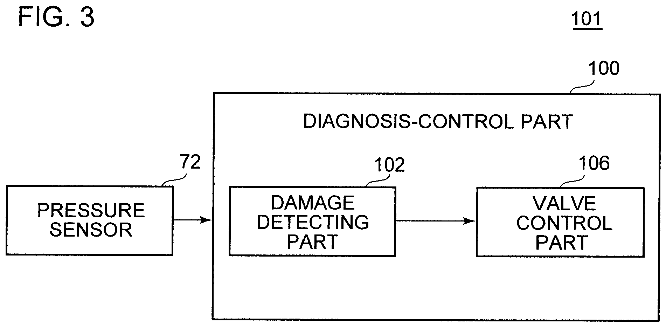

FIG. 2 is a schematic configuration diagram of a hydraulic machine according to an embodiment, and FIG. 3 is a schematic configuration diagram of a diagnosis system according to an embodiment.

As illustrated in FIG. 2, the hydraulic machine 20 to be diagnosed by a diagnosis system and a diagnosis method according to an embodiment includes a rotor shaft 32, a cylinder 21, a piston 22 forming a working chamber 24 together with the cylinder 21, a high-pressure valve 28 and a low-pressure valve 30 provided for the working chamber 24, and a cam 26 (conversion mechanism) for performing conversion between the reciprocal motion of the piston 22 and the rotational motion of the rotor shaft 32. The cam 26 has a cam curved surface configured to contact the piston 22.

In the hydraulic machine 20, a plurality of cylinders 21 and a plurality of pistons 22 are disposed along the circumferential direction of the hydraulic machine 20.

The piston 22 preferably includes a piston body 22A which slides inside the cylinder 21, and a piston roller or a piston shoe which is attached to the piston body 22A and which contacts the cam curved surface of the cam 26, from the viewpoint of smooth conversion of the reciprocal motion of the piston 22 into the rotational motion of the rotor shaft 32. In the example illustrated in FIG. 2, the piston 22 includes a piston body 22A and a piston shoe 22B.

The cam 26 is an eccentric cam disposed eccentrically from the axial center O of the rotor shaft (crank shaft) 32 of the hydraulic machine 20. While the piston 22 performs a set of upward and downward movement, the cam 26 and the rotor shaft 32 to which the cam 26 is mounted perform one revolution.

In another embodiment, the cam 26 is an annular-shaped multi-lobed cam (ring cam) with a plurality of lobes. In this case, while the cam 26 and the rotor shaft 32 to which the cam 26 is mounted perform one revolution, the piston 22 performs as many sets of upward and downward movement as the number of lobes.

The high-pressure valve 28 is disposed in a high-pressure communication line 34 between the working chamber 24 and the high-pressure line 12 disposed outside the working chamber 24, and configured to be capable of switching the communication state between the working chamber 24 and the high-pressure line 12. The low-pressure valve 30 is disposed in a low-pressure communication line 36 between the working chamber 24 and the low-pressure line 14 disposed outside the working chamber 24, and configured to be capable of switching the communication state between the working chamber 24 and the low-pressure line 14.

At least one of the high-pressure valve 28 or the low-pressure valve 30 is a solenoid valve which can be controlled to open and close by switching supply of excitation current to a coil.

A diagnosis system 101 of the hydraulic machine 20 depicted in FIGs. 2 and 3 includes a pressure sensor 72 for detecting a pressure of each working chamber 24, and a diagnosis-control part 100 for diagnosing and controlling the hydraulic machine 20 on the basis of pressure detection results obtained by the pressure sensor (pressure measuring part) 72.

The diagnosis-control part 100 of the diagnosis system 101 includes a damage-detecting part 102, and a valve control part 106. The diagnosis system 101 is configured to detect a damage of the high-pressure valve 28 of the hydraulic machine 20 as described below.

In the hydraulic machine 20 depicted in FIG. 2, valves are controlled in accordance with reciprocal motion of a piston 22, so that a pressure of the working chamber 24, also referred to as a working chamber pressure hereinafter, changes cyclically in accordance with the reciprocal motion of the piston 22.

If the hydraulic machine 20 is the hydraulic motor 10, a differential pressure between the high-pressure line 12 and the low-pressure line 14 created by the hydraulic pump 8 moves the pistons 22 upward and downward cyclically, so that each piston 22 repeats a motor stroke of moving toward the bottom dead center from the top dead center and a discharge stroke of moving toward the top dead center from the bottom dead center. While the hydraulic motor 10 is operating, the capacity of the working chamber 24 formed by the piston 22 and the inner wall surface of the cylinder 21 changes cyclically. In other words, in the hydraulic motor 10, the high-pressure valve 28 is opened and the low-pressure valve 30 is closed during the motor stroke to cause working oil to flow into the working chamber 24 from the high-pressure line 12, and the high-pressure valve 28 is closed and the low-pressure valve 30 is opened during the discharge stroke to send out the working oil having performed work in the working chamber 24 to the low-pressure line 14.

Accordingly, pressurized oil is introduced into the working chamber 24 to cause reciprocal motion of the piston 22, and the reciprocal motion is converted into rotational motion of the cam 26, so that the rotor shaft 32 of the hydraulic machine 20 rotates with the cam 26.

If the hydraulic machine 20 is the hydraulic pump 8, rotation of the cam 26 along with the rotor shaft 32 moves the pistons 22 upward and downward cyclically in accordance with a cam surface, so that each piston 22 repeats a pump stroke of moving from the bottom dead center toward the top dead center and a suction stroke of moving from the top dead center toward the bottom dead center. Thus, the capacity of the working chamber 24 formed by the piston 22 and the inner wall surface of the cylinder 21 changes cyclically. In other words, in the hydraulic pump 8, the high-pressure valve 28 is closed and the low-pressure valve 30 is opened during the suction stroke to cause working oil to flow into the working chamber 24 from the low-pressure line 14, and the high-pressure valve 28 is opened and the low-pressure valve 30 is closed during the pump stroke to send out the compressed working oil from the working chamber 24 to the high-pressure line 12.

Accordingly, the rotational motion of the cam 26 rotating with the rotor shaft 32 of the hydraulic machine 20 is converted into the reciprocal motion of the piston 22, so that the cyclic capacity change of the working chamber 24 takes place and high-pressure working oil (pressurized oil) is produced in the working chamber 24.

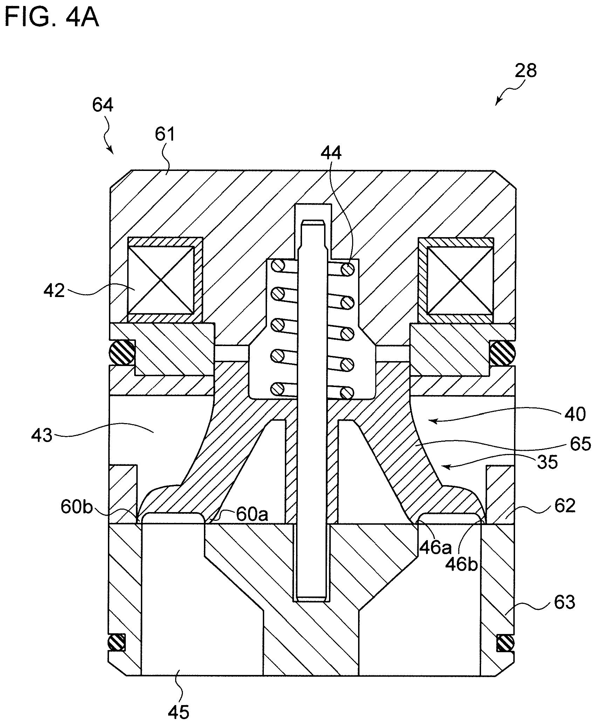

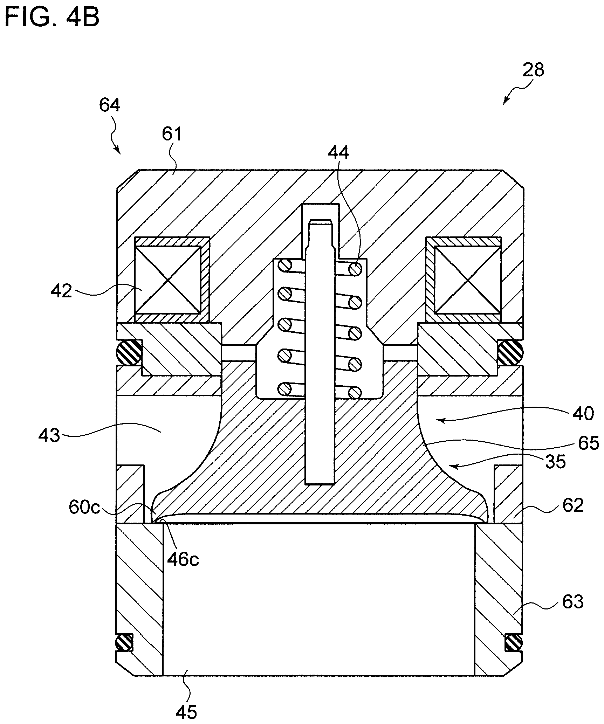

Next, the high-pressure valve 28 will be described with reference to FIGs. 4A and 4B. FIGs. 4A and 4B are each a cross-sectional view of a high-pressure valve 28 according to an embodiment.

The high-pressure valve 28 depicted in FIGs. 4A and 4B is a solenoid valve which can be controlled to open and close by switching supply of excitation current to a coil, and FIGs. 4A and 4B are each a view of the high-pressure valve 28 in a closed state.

In some embodiments, the high-pressure valve 28 in the hydraulic machine 20 may be a check valve of poppet type configured to permit only a flow of working oil flowing toward the high-pressure line 12 from the working chamber 24.

The high-pressure valve 28 according to some embodiments is a poppet valve including a seat 46 (46a to 46c) and a poppet (valve body) 35 disposed facing the seat 46 as depicted in FIGs. 4A and 4B. The poppet 35 is configured to contact the seat 46 from the side of the high-pressure line 12 (see FIG. 2) of the hydraulic machine 20. Specifically, the poppet 35 is accommodated in a valve casing 64 including valve-casing parts 61, 62, 63, and the valve casing 64 is provided with the first communication flow path 43 communicating with the high-pressure line 12, and the second communication flow path 45 communicating with the working chamber 24. The poppet 35 is disposed between the first communication flow path 43 and the second communication flow path 45, at the side closer to the first communication flow path 43 with respect to the seat 46, so as to contact the seat 46 from the side of the first communication flow path 43.

In the high-pressure valve 28 depicted in FIGs. 4A and 4B, the poppet 35 includes a poppet body 65, and ridges 60 (60a to 60c) protruding toward the seat 46 (46a to 46c) from the poppet body 65.

In the high-pressure valve 28 depicted in FIG. 4A, the poppet 35 includes an inner ridge 60a protruding toward the seat 46 from the poppet body 65, and an outer ridge 60b disposed radially outside the inner ridge 60a and protruding toward the seat 46 from the poppet body 65. Furthermore, the seat 46 includes an inner seat 46a and an outer seat 46b disposed radially outside the inner seat, and the inner ridge 60a and the outer ridge 60b contact the inner seat 46a and the outer seat 46b, respectively.

The high-pressure valve 28 is configured to cause the high-pressure line 12 and the working chamber 24 to be in a non-communicating state in a closed state of the high-pressure valve 28, by the inner ridge 60a and the outer ridge 60b contacting the seat 46 (46a, 46b). That is, the high-pressure valve 28 is a high-pressure valve including a poppet 35 of double-seat type that contacts the seat 46 disposed in a double pattern.

On the other hand, in the high-pressure valve 28 depicted in FIG. 4B, the poppet 35 includes a poppet body 65, and a ridge 60 protruding toward the seat 46c from the poppet body 65. The high-pressure valve 28 is configured to cause the high-pressure line 12 and the working chamber 24 to be in a non-communicating state in a closed state of the high-pressure valve 28, by the ridge 60c of the poppet 35 contacting the seat 46c. That is, the high-pressure valve 28 is a high-pressure valve including a poppet 35 of single-seat type that contacts the seat 46 disposed in a single pattern.

In some embodiments, the high-pressure valve 28 may be a solenoid valve which can be controlled to open and close by switching supply of excitation current to a coil.

The high-pressure valve 28 depicted in FIGs. 4A and 4B further includes a movable unit 40 including a poppet 35, a solenoid coil 42 that functions as an actuator for moving the movable unit 40 between a valve-open position and a valve-closed position, and a spring 44. The high-pressure valve 28 is a poppet solenoid valve of normally-closed type, with the seat 46 disposed on a working-chamber 24 side of the poppet 35. The high-pressure valve 28 is capable of switching the communication state between the working chamber 24 and the high-pressure line 12 (see FIG. 2) by movement of the movable unit 40 caused by the electromagnetic force of the solenoid coil 42 or the biasing force of the spring 44.

The high-pressure valve 28 is controlled to open and close by control signals (opening/closing command) sent from a valve controller. In some embodiments, the valve control part 106 (see FIG. 3) of the diagnosis-control part 100 provides the high-pressure valve 28 with control signals of the opening/closing command.

When the high-pressure valve 28 is not excited by a control signal from the valve control part 106, the movable unit 40 is biased toward the seat 46 by the spring 44, so as to be retained in a position where the working chamber 24 and the high-pressure line 12 are not in communication (normal position; the position of the movable unit 40 depicted in FIGs. 4A and 4B) (That is, the high-pressure valve 28 comes into a closed state). When the high-pressure valve 28 is excited by a control signal from the valve control part 106, the movable unit 40 moves to a position such that the working chamber 24 and the high-pressure line 12 communicate with each other by the electromagnetic force, against the biasing force of the spring 44 (excitation position) (That is, the high-pressure valve 28 comes into an open state). In other words, the high-pressure valve 28 is configured such that the valve body is movable by the supply control of the excitation current, between a normal position, where the excitation current is not supplied, and an excitation position, where the excitation current is supplied.

Described below is a method of diagnosing a hydraulic machine, for detecting a damage of the high-pressure valve 28 of the hydraulic machine 20 having the above described configuration.

A method of diagnosing the hydraulic machine 20 according to some embodiments includes a pressure measuring step of measuring a pressure of the working chamber 24 (working chamber pressure) while the high-pressure valve 28 and the low-pressure valve 30 are closed, and a damage detecting step of detecting a damage of the high-pressure valve 28 on the basis of the pressure of the working chamber 24 (working chamber pressure).

In some embodiments, the method of diagnosing the hydraulic machine 20 described below is performed by the above described diagnosis system 101.

(Pressure measuring step)

In the pressure measuring step, a pressure of the working chamber 24 (working chamber pressure) is measured while the high-pressure valve 28 and the low-pressure valve 30 are closed.

In some embodiments, at least one of the high-pressure valve 28 or the low-pressure valve 30 is the above described solenoid valve, and in the pressure measuring step, the high-pressure valve 28 or the low-pressure valve 30 may be closed by providing the high-pressure valve 28 or the low-pressure valve 30 being a solenoid valve with a control signal (closing command) from the valve control part 106 (see FIG. 3).

In the pressure detecting step, the working chamber pressure of each cylinder 21 may be detected by using the pressure sensor 72 disposed on each cylinder 21 of the hydraulic machine 20.

(Damage detecting step)

In the damage detecting step, a damage of the high-pressure valve 28 is detected on the basis of a pressure of the working chamber 24 (working chamber pressure).

According to the findings of the present inventors, a condition of a damage of the high-pressure valve 28 may affect a pressure of the working chamber 24 measured in a state where the high-pressure valve 28 and the low-pressure valve 30 are closed. Thus, on the basis of a pressure of the working chamber 24 measured while the high-pressure valve 28 and the low-pressure valve 30 are closed, it is possible to detect a damage of the high-pressure valve 28 related to abrasion of the poppet 35.

In the pressure measuring step and the damage detecting step according to some embodiments, damage detection is to be performed on the high-pressure valve 28 depicted in FIG. 4A, i.e., the high-pressure valve 28 including the poppet 35 of double-seat type including the inner ridge 60a and the outer ridge 60b disposed radially outside the inner ridge 60a.

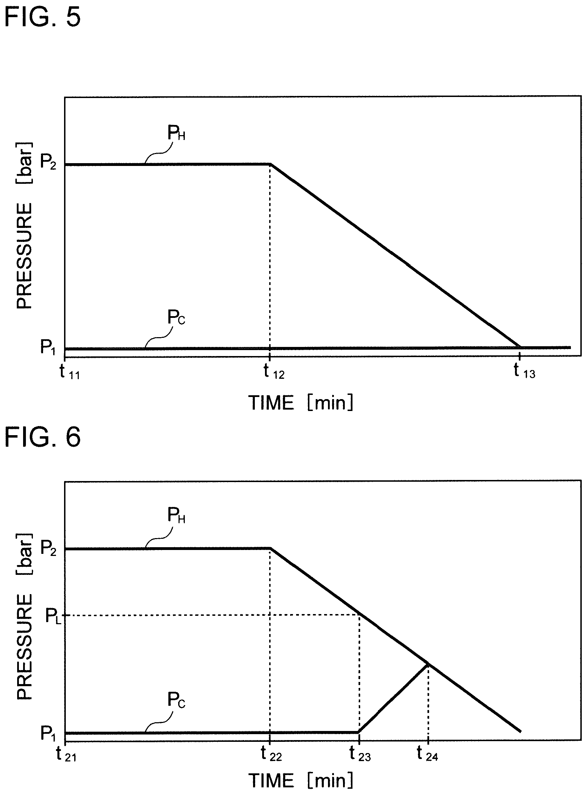

With reference to FIGs. 5 to 9, a damage detecting step will now be described, which is to be performed on the high-pressure valve 28 including the poppet 35 of double-seat type depicted in FIG. 4A as an example.

In an embodiment, in the pressure measuring step, a pressure of the working chamber 24 is measured in a state where the high-pressure valve 28 and the low-pressure valve 30 are closed, while reducing the pressure of the high-pressure line 12.

The pressure of the high-pressure line 12 may be gradually reduced by using a relief valve disposed in the high-pressure line 12, after increasing the pressure to a predetermined pressure by using the hydraulic pump 8 or the like and then stopping the hydraulic pump 8, in a state where the high-pressure valve 28 and the low-pressure valve 30 are closed. Alternatively, the pressure of the high-pressure line 12 may be reduced naturally by normal oil leakage in the system of the high-pressure line 12, after increasing the pressure to a predetermined pressure by using the hydraulic pump 8 or the like, in a state where the high-pressure valve 28 and the low-pressure valve 30 are closed.

In the damage detecting step, a damage of the high-pressure valve 28 is detected on the basis of a pressure of the high-pressure line 12 at the time when the pressure of the working chamber 24 begins to increase.

FIGs. 5 and 6 are each an example of a result of measurement of a pressure in the working chamber 24 provided with the high-pressure valve 28 depicted in FIG. 4A, obtained in the above-described pressure measuring step.

In FIGs. 5 and 6, x-axis represents time and y-axis represents pressure. Further, in the graph of FIGs. 5 and 6, $P_H$ represents a pressure of the high-pressure line 12, and $P_C$ represents a working-chamber pressure.

In the result of measurement of the working chamber pressure $P_C$ depicted in FIG. 5, at time $t_{11}$, when the pressure $P_H$ of the high-pressure line 12 (high-pressure line pressure) is increased to a predetermined pressure $P_2$ by the hydraulic pump 8 or the like, the working chamber pressure $P_C$ is at a pressure $P_1$ that corresponds to the pressure of the low-pressure line 14. (This is because, while the working chamber 24 and the high-pressure line 12 are not in communication, the working chamber 24 and the low-pressure line 14 are in communication.) Then, while the high-pressure valve 28 and the low-pressure valve 30 are closed, the high-pressure line pressure $P_H$ is gradually reduced from time $t_{12}$, but the working chamber pressure $P_C$ is not increased when the high-pressure line pressure $P_H$ reaches the pressure $P_1$ corresponding to the pressure of the low-pressure line 14.

On the other hand, in the result of measurement of the working chamber pressure $P_C$ depicted in FIG. 6, at time $t_{21}$, when the high-pressure line pressure $P_H$ is at the predetermined pressure $P_2$, the working chamber pressure $P_C$ is at the pressure $P_1$, which corresponds to the pressure of the low-pressure line 14. Then, while the high-pressure valve 28 and the low-pressure valve 30 are closed, the high-pressure line pressure $P_H$ is gradually reduced from time $t_{22}$, and the working chamber pressure $P_C$ begins to increase from time $t_{23}$. Herein, the high-pressure line pressure $P_H$ at the time when the working chamber pressure $P_C$ begins to increase is referred to as a leak pressure $P_L$. Then, the working chamber pressure $P_C$ increases in accordance with a decrease in the high-pressure line pressure $P_H$, and from time $t_{24}$, when the high-pressure line pressure $P_H$ and the working chamber pressure $P_C$ are equal, the working chamber pressure $P_C$ and the high-pressure line pressure $P_H$ decrease at the same pressure.

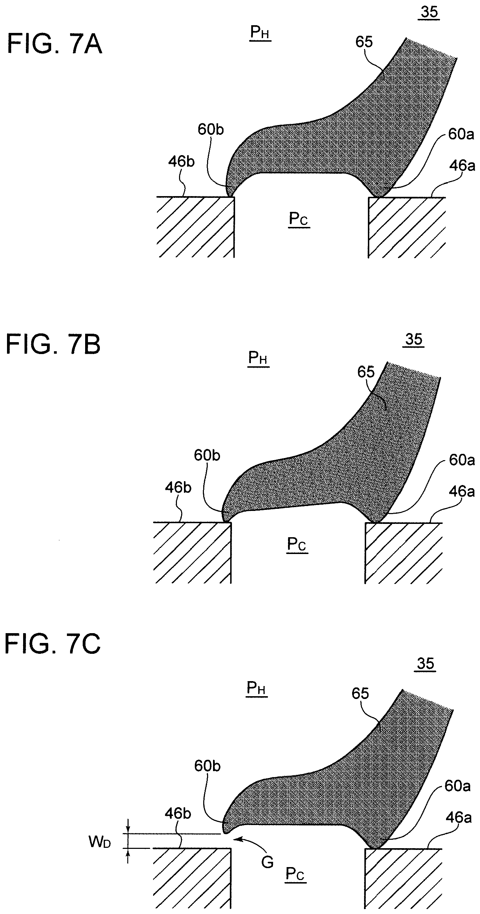

Now, FIGs. 7A to 7C are each a diagram of a seat portion (ridges 60a, 60b and seats 46a, 46b) of the high-pressure valve 28 according to an embodiment, for describing the principle of damage detection according to an embodiment. While abrasion does not exist in the poppet 35 depicted in FIG. 7A, abrasion exists in the outer ridge 60b of the poppet 35 depicted in FIGs. 7B and 7C.

The result of measurement of the working chamber pressure $P_C$ shown in FIG. 5 is from a case where the poppet 35 of the high-pressure valve 28 has not yet developed abrasion, as depicted in FIG. 7A. In this case, even if the high-pressure line pressure $P_H$ is reduced while the high-pressure valve 28 and the low-pressure valve 30 are closed (after time $t_{12}$ in the graph of FIG. 5), the inner ridge 60a and the outer ridge 60b of the poppet 35 are each in contact with the seat 46. Thus, the high-pressure line 12 and the working chamber 24 are maintained in a non-communicating state, and the working chamber pressure $P_C$ does not increase despite passage of time (the period between $t_{12}$ and $t_{13}$ in the graph of FIG. 5).

On the other hand, the result of measurement of the working chamber pressure $P_C$ shown in FIG. 6 is from a case where the poppet 35 of the high-pressure valve 28 has abrasion on the ridges 60a, 60b, as depicted in FIGs. 7B and 7C. In the case of the poppet valve of double-seat type depicted in FIG. 4A, abrasion may develop more on either one of the inner ridge 60a or the outer ridge 60b, and the abrasion amount (depth of abrasion) may be different between the inner ridge 60a and the outer ridge 60b. In this regard, in FIGs. 7B and 7C for instance, abrasion is more advanced on the outer ridge 60b, and the abrasion amount (depth of amount) of the outer ridge 60b is greater than that of the inner ridge 60a by $W_D$.

With the abrasion amount being different between the inner ridge 60a and the outer ridge 60b as described above, the working chamber pressure $P_C$ does not increase until a certain point of time ($t_{23}$ in the graph of FIG. 6) even if the high-pressure line pressure $P_H$ is reduced while the high-pressure valve 28 and the low-pressure valve 30 are closed.

The reason is considered to be as follows. Specifically, as depicted in FIG. 7B, in a period during which the working chamber pressure $P_C$ does not increase while the high-pressure line pressure $P_H$ is reduced, the high-pressure line pressure $P_H$ is relatively high. Accordingly, even if one of the ridges 60a, 60b of the poppet 35 has a reduced height due to abrasion, the poppet 35 deforms in response to a high pressure from the side of the high-pressure line 12. As a result, both of the ridges 60a, 60b are maintained to be in contact with the seat 46.

Furthermore, if the high-pressure line pressure $P_H$ is reduced further while the high-pressure valve 28 and the low-pressure valve 30 are closed, the working chamber pressure $P_C$ begins to increase from a certain point of time ($t_{23}$ in the graph of FIG. 6). The reason is considered to be as follows. If the high-pressure line pressure $P_H$ decreases from the time of $t_{23}$ and a force that presses the poppet 35 against the seat 46 from the side of the high-pressure line 12 decreases, the poppet 35 recovers from deformation due to the high pressure from the side of the high-pressure line 12. Then, as depicted in FIG. 7C, a gap G is created between the outer ridge 60b and the outer seat 46b, and working oil leaks through the gap G from the side of the high-pressure line 12 toward the side of the working chamber 24.

As described above, if an increase can be recognized in a cylinder pressure (working chamber pressure) measured while reducing the pressure of the high-pressure line 12 while the high-pressure valve 28 and the low-pressure valve 30 are closed, it can be assumed that leakage due to abrasion or the like on the poppet 35 exists in the high-pressure valve 28. Thus, it is possible to determine a leak pressure $P_L$ of the high-pressure valve on the basis of the pressure $P_H$ of the high-pressure line at the time (e.g. time $t_{23}$ in FIG. 6) of a start of an increase of a cylinder pressure (working chamber pressure) measured while reducing a pressure of the high-pressure line 12 while the high-pressure valve 28 and the low-pressure valve 30 are closed, and to detect a damage of the high-pressure valve 28 related to abrasion of the poppet 35 (inner ridge 60a or outer ridge 60b) appropriately on the basis of the leak pressure $P_L$.

In an embodiment, in the damage detecting step, occurrence of a difference in the abrasion amount between the inner ridge 60a and the outer ridge 60b in the high-pressure valve 28 is detected on the basis of the pressure $P_H$ of the high-pressure line 12 at which the pressure $P_C$ of the working chamber 24 begins to increase.

As described above, if a gap (e.g. G in FIG. 7C) is created between the seat 46 and one of the inner ridge 60a or the outer ridge 60b due to a difference in the degree of development of abrasion between the inner ridge 60a and the outer ridge 60b, the poppet 35 may get deformed by high-pressure oil in accordance with the amount of the gap. In this case, a stress due to deformation of the poppet 35 is generated, and a risk of fatigue failure of the poppet 35 rises.

Herein, according to the present inventors, in the case of occurrence of a damage mode of the high-pressure valve 28 such that the development degree of abrasion is different between the inner ridge 60a and the outer ridge 60b, if the cylinder pressure $P_C$ is measured while reducing the pressure $P_H$ of the high-pressure line 12 in a state where the high-pressure valve 28 and the low-pressure valve 30 are closed, the cylinder pressure $P_C$ begins to increase at a certain pressure $P_H$ of the high-pressure line 12. The reason is considered to be as follows. Reducing the pressure $P_H$ of the high-pressure line permits the poppet 35 to recover from deformation due to high-pressure oil, and thereby the gap G between the seat 46 and one of the inner ridge 60a or the outer ridge 60b opens, which causes high-pressure oil to flow into the working chamber 24 from the high-pressure line 12 through the gap G.

As described above, it is possible to detect presence of occurrence of a damage mode (uneven abrasion) of the high-pressure valve 28 such that the degree of development of abrasion is different between the inner ridge 60a and the outer ridge 60b, on the basis of the pressure $P_H$ (i.e., leak pressure $P_L$) of the high-pressure line 12 at the time of a start of an increase in the cylinder pressure $P_C$ measured while the pressure $P_H$ of the high-pressure line 12 is reduced in a state where the high-pressure valve 28 and the low-pressure valve 30 are closed.

In the damage detecting step according to an embodiment, a degree of damage of the high-pressure valve 28 is evaluated on the basis of the pressure $P_H$ of the high-pressure line at the time when the working chamber pressure $P_C$ begins to increase (i.e., leak pressure $P_L$).

According to the findings of the present inventors, the pressure $P_H$ of the high-pressure line 12 at the time of a start of an increase in the cylinder pressure $P_C$ (i.e., leak pressure $P_L$) measured while the pressure $P_H$ of the high-pressure line 12 is reduced in a state where the high-pressure valve 28 and the low-pressure valve 30 are closed, has a correlation with the degree of damage of the high-pressure valve 28 (a widening amount of a gap between the poppet 35 and the seat 46).

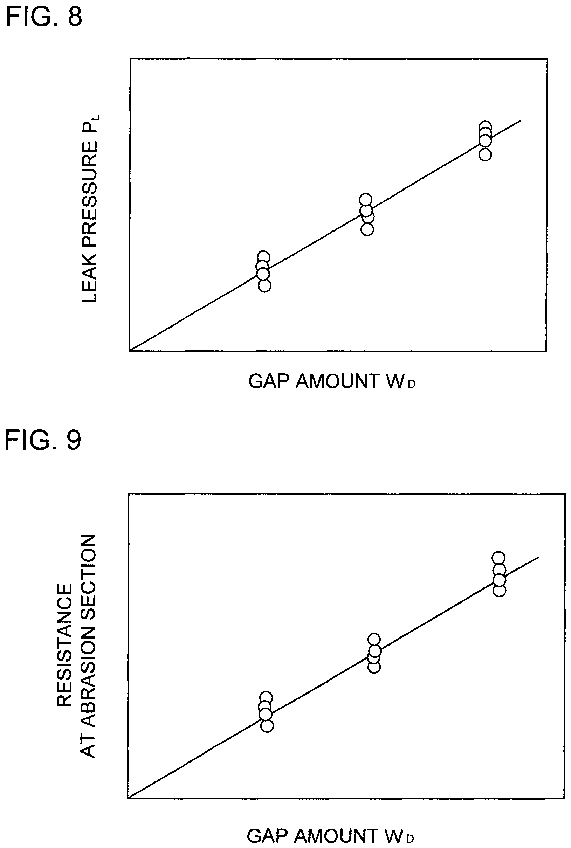

FIG. 8 is a graph showing an example of a correlation between the leak pressure (pressure at which leakage occurs) $P_L$ and a gap amount $W_D$ between the poppet 35 and the seat 46 (e.g. the gap amount $W_D$ between the outer ridge 60d and the seat 46b depicted in FIG. 7C).

As shown in FIG. 8, the leak pressure $P_L$ tends to increase with an increase in the gap amount $W_D$ between the poppet 35 and the seat 46 (in other words, with an increase in a difference in the abrasion amount between the inner ridge 60a and the outer ridge 60b).

On the basis of such a correlation between the leak pressure $P_L$ and the gap amount $W_D$, it is possible to evaluate the degree of damage (development degree of damage) of the high-pressure valve 28, on the basis of the pressure (leak pressure $P_L$) of the high-pressure line at the time of a start of an increase in the cylinder pressure $P_C$ measured while the pressure $P_H$ of the high-pressure line 12 is reduced in a state where the high-pressure valve 28 and the low-pressure valve 30 are closed.

For instance, the larger the leak pressure $P_L$ is, the higher the degree of damage of the high-pressure valve 28 may be in an evaluation. More specifically, it is possible to evaluate that, the larger the leak pressure $P_L$ is, the greater the difference is in the amount of abrasion between the inner ridge 60a and the outer ridge 60b in the high-pressure valve 28, which means that the degree of damage is higher.

In an embodiment, in the damage detecting step, a damage of the high-pressure valve 28 is detected on the basis of a ratio of a change rate of the working chamber pressure $P_C$ to a difference between the pressure $P_H$ of the high-pressure line 12 and the working chamber pressure $P_C$.

A ratio of a change rate of the cylinder pressure $P_C$ to a pressure differential between the pressure $P_H$ of the high-pressure line 12 and the cylinder pressure $P_C$ represents a flow resistance R in the gap G between the poppet 35 and the seat 46. According to the findings of the present inventors, there is a correlation between the abrasion amount of the poppet and the flow resistance R.

FIG. 9 is a graph showing an example of a correlation between the flow resistance R in the abrasion section (gap G) and the gap amount $W_D$ between the poppet 35 and the seat 46 (e.g. the gap amount $W_D$ between the outer ridge 60d and the seat 46b depicted in FIG. 7C).

The flow resistance R in the abrasion section (gap G) can be obtained by an expression below.

The leak amount Q of working oil in the gap between the poppet 35 and the seat 46 can be expressed by the following expression (1):

$$Q = R(P_H\text{-}P_C) \qquad (1)$$

where R is the flow resistance in the gap G, $P_H$ is the high-pressure line pressure, and $P_C$ is the working chamber pressure.

Further, the change rate $(P_C)'$ of the working chamber pressure $P_C$ can be expressed by the following expression (2):

$$(P_C)' = (K_E/V_C) \times Q \qquad (2)$$

where Q is the leak amount described above, $V_C$ is a working chamber capacity, and $K_E$ is a bulk modulus of elasticity of working oil.

Accordingly, from the expressions (1) and (2), the flow resistance R can be expressed by the following expression (3):

$$R = (V_C/((P_H\text{-}P_C)\times K_E)) \times (P_C)' \qquad (3)$$

Specifically, as shown in the expression (3), the flow resistance R in the abrasion section (gap G) can be expressed by using a ratio of the change rate of the working chamber pressure $P_C$ to a difference between the pressure $P_H$ of the high-pressure line 12 and the working chamber pressure $P_C$.

As shown in FIG. 9, the flow resistance R in the abrasion section (gap G) tends to increase with an increase in the gap amount $W_D$ between the poppet 35 and the seat 46 (in other words, with an increase in a difference in the abrasion amount between the inner ridge 60a and the outer ridge 60b).

Thus, it is possible to detect a damage of the high-pressure valve 28 related to abrasion of the poppet 35, on the basis of a correlation between the flow resistance R in the abrasion section (gap G) and the gap amount $W_D$ between the poppet 35 and the seat 46.

For instance, the larger the flow resistance R in the abrasion section (gap G) is, the higher the degree of damage of the high-pressure valve 28 may be, in an evaluation. More specifically, it is possible to evaluate that, the larger the flow resistance R in the abrasion section (gap G) is, the greater the difference is in the amount of abrasion between the inner ridge 60a and the outer ridge 60b in the high-pressure valve 28, which means that the degree of damage is higher.

Further, in the pressure measuring step and the damage detecting step according to some embodiments, damage detection is to be performed on the high-pressure valve 28 depicted in FIG. 4B, i.e., the high-pressure valve 28 including the poppet 35 of single-seat type that contacts the seat 46 disposed in a single pattern.

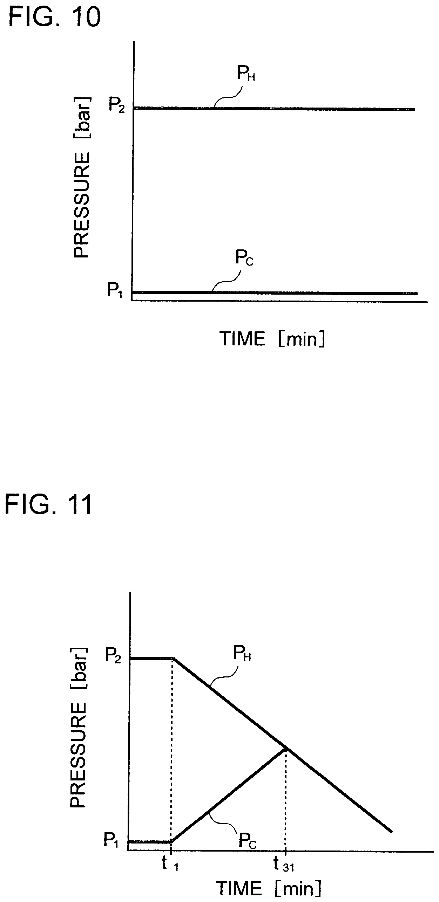

With reference to FIGs. 10 and 11, a damage detecting step will now be described, which is to be performed on the high-pressure valve 28 including the poppet 35 of single-seat type depicted in FIG. 4B as an example.

In an embodiment, in the pressure measuring step, a pressure of the working chamber 24 (working chamber pressure) is measured in a state where the high-pressure valve 28 and the low-pressure valve 30 are closed, and in the damage detecting step, it is determined that a damage of the high-pressure valve 28 exists on the basis of the presence of an increase of the working chamber pressure.

FIGs. 10 and 11 are each an example of a result of measurement of a pressure in the working chamber 24 provided with the high-pressure valve 28 depicted in FIG. 4B, obtained in the above-described pressure measuring step. Furthermore, the graph in FIG. 10 shows a result of measurement of a working chamber pressure in the case where a damage such as abrasion does not exist in the poppet 35 (or the ridge 60c) of the high-pressure valve 28, while the graph in FIG. 11 shows a result of measurement of a working chamber pressure in the case where a damage such as abrasion exists on the poppet 35 (or ridge 60c) of the high-pressure valve 28.

If the poppet 35 does not have abrasion, as depicted in FIG. 10, in a state where the high-pressure valve 28 and the low-pressure valve 30 are closed, the ridge 60c of the poppet 35 and the seat 46c are in contact and thereby the high-pressure line 12 and the working chamber 24 are in a non-communicating state. Thus, the high-pressure line pressure $P_H$ does not change from the initial pressure $P_2$, and the working chamber pressure $P_C$ does not change from the initial pressure $P_1$ (pressure corresponding to the pressure of the low-pressure line 14).

On the other hand, if the poppet 35 has abrasion, in a state where the high-pressure valve 28 and the low-pressure valve 30 are closed, a gap is created between the ridge 60c of the poppet 35 and the seat 46c. As a result, the high-pressure line 12 and the working chamber 24 are always in a communicating state via the gap. Accordingly, from time $t_1$, when supply of high-pressure oil from the hydraulic pump 8 or the like to the high-pressure line pressure $P_H$ is stopped, the high-pressure line pressure $P_H$ decreases from the initial pressure $P_2$, and the working chamber pressure $P_C$ increases from the initial pressure $P_1$ (pressure corresponding to the pressure of the low-pressure line 14). Then, from time $t_2$, when the high-pressure line pressure $P_H$ and the working chamber pressure $P_C$ are equal, the working chamber pressure $P_C$ and the high-pressure line pressure $P_H$ decrease at the same pressure.

As described above, if the poppet 35 has abrasion in the high-pressure valve 28 (poppet valve) of single-seat type, a working chamber pressure should increase if a working chamber pressure is measured in a state where the high-pressure valve 28 and the low-pressure valve 30 are closed. Thus, on the basis of presence of an increase in the cylinder pressure measured while the high-pressure valve 28 and the low-pressure valve 30 are closed, it is possible to determine that a damage exists in the high-pressure valve 28 related to abrasion of the poppet 35.

If it is determined that a damage of the high-pressure valve 28 exists in the damage detecting step described above, the cylinder 21 corresponding to the high-pressure valve 28 may be brought into an inactive state of not generating a displacement, from among the cylinders 21 of the hydraulic machine 20. Alternatively, if it is determined in the damage detecting step that a damage exists in the high-pressure valve 28, the high-pressure valve 28 may be replaced.

To bring the cylinder 21 of the hydraulic machine 20 into an inactive state, the valve control part 106 (see FIG. 3) sends a control signal of a suitable opening/closing command to the high-pressure valve 28 and the low-pressure valve 30 corresponding to the cylinder 21. To bring the cylinder 21 into an inactive state in the hydraulic machine 20 (hydraulic motor 10 or a hydraulic pump), the high-pressure valve 28 corresponding to the cylinder 21 is kept closed, and the low-pressure valve 30 is kept open. Accordingly, the cylinder 21 and the high-pressure line 12 are in a non-communicating state, while the cylinder 21 and the low-pressure line 14 are in a communicating state, and thereby working oil only flows in and out between the working chamber 24 and the low-pressure line 14. Thus, the piston 22 corresponding to the cylinder 21 does not perform any substantial work, or no substantially work is performed on the piston 22.

Embodiments of the present invention were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

**Claims**

1. A method of diagnosing a hydraulic machine (20) which comprises a rotor shaft (32), a cylinder (21), a piston (22) forming a working chamber (24) together with the cylinder (21), and a high-pressure valve (28) and a low-pressure valve (30) provided for the working chamber (24), and which is configured to perform conversion between rotational motion of the rotor shaft (32) and reciprocal motion of the piston (22),

   the high-pressure valve (28) comprising a poppet valve including a seat (46,46a,46b;46c) and a poppet (35) configured to be in contact with the seat (46,46a,46b;46c) from a side of a high-pressure line (12) of the hydraulic machine (20),

   the method being **characterised in that** it comprises:

   a step of reducing the pressure ($P_H$) of the high-pressure line (12); and
   a step of measuring a pressure ($P_C$) of the working chamber (24) in a state while the high-pressure valve (28) and the low-pressure valve (30) are closed, no reciprocal motion of the piston (22) takes place, and the initial pressure ($P_C$) of the working chamber (24) is at a pressure (PI) that corresponds to the pressure of a low-pressure line (14) of the hydraulic machine (20); and
   a step of detecting a damage of the high-pressure valve (28) on the basis of an increase of the pressure ($P_C$) of the working chamber (24) while reducing the pressure ($P_H$) of the high-pressure line (12).

2. The method of diagnosing a hydraulic machine (20) according to claim 1,
   wherein the poppet (35) comprises:

   a poppet body (65);
   an inner ridge (60a) protruding toward the seat (46,46a) from the poppet body (65); and
   an outer ridge (60b) disposed radially outside the inner ridge (60a) and protruding toward the seat (46,46b) from the poppet body (65),

wherein the high-pressure valve (28) is configured to cause the high-pressure line (12) and the working chamber (24) to be in a non-communicating state by the inner ridge (60a) and the outer ridge (60b) of the poppet (35) being in contact with the seat (46,46a,46b), in a state where the high-pressure valve (28) is closed,

wherein the step of measuring the pressure comprises measuring the pressure ($P_C$) of the working chamber (24) while reducing a pressure of the high-pressure line (12), in a state where the high-pressure valve (28) and the low-pressure valve (30) are closed, and

wherein the step of detecting a damage comprises detecting a damage of the high-pressure valve (28) on the basis of a pressure value ($P_L$) of the high-pressure line (12) at the time of a start of the increase in the pressure ($P_C$) of the working chamber (24).

3. The method of diagnosing a hydraulic machine (20) according to claim 2, further comprising a step of detecting occurrence of the damage of the high-pressure valve (28), such as a difference in an abrasion amount between the inner ridge (60a) and the outer ridge (60b) in the high-pressure valve (28), on the basis of a pressure of the high-pressure line ($P_L$) at which the pressure ($P_C$) of the working chamber (24) begins to increase.

4. The method of diagnosing a hydraulic machine (20) according to claim 2 or 3,
wherein the step of detecting the damage comprises evaluating a damage of the high-pressure valve (28), such as a degree of damage of the high-pressure valve (28) on the basis of the pressure value ($P_L$) of the high-pressure line (12) at the time of a start of an increase in the pressure ($P_C$) of the working chamber (24).

5. The method of diagnosing a hydraulic machine (20) according to claim 1,
wherein the step of detecting a damage comprises determining that a damage exists in the high-pressure valve (28), on the basis of presence of an increase in the pressure ($P_C$) of the working chamber (24).

6. The method of diagnosing a hydraulic machine (20) according to claim 1,
wherein the step of detecting a damage comprises detecting a damage of the high-pressure valve (28) on the basis of a ratio of a change rate of the pressure ($P_C$) of the working chamber (24) to a difference between a pressure ($P_H$) of the high-pressure line (12) and the pressure ($P_C$) of the working chamber (24).

7. The method of diagnosing a hydraulic machine (20) according to any one of claims 1 to 6, further comprising a step of, if a damage of the high-pressure valve (28) is detected in the damage detecting step, causing the cylinder (21) corresponding to the high-pressure valve (28) to be in an inactive state of not generating a displacement, or replacing the high-pressure valve (28).

8. A diagnosis system (101) for a hydraulic machine (20) which comprises a rotor shaft (32), a cylinder (21), a piston (22) forming a working chamber (24) together with the cylinder (21), and a high-pressure valve (28) and a low-pressure valve (30) provided for the working chamber (24), and which is configured to perform conversion between rotational motion of the rotor shaft (32) and reciprocal motion of the piston (22),

the high-pressure valve (28) comprising a poppet valve which includes a seat (46,46a,46b;46c) and a poppet (35) configured to be in contact with the seat (46,46a,46b;46c) from a side of a high-pressure line (12) of the hydraulic machine (20),

the diagnosis system (101) being **characterised in that** it comprises:

a pressure measuring part (72) configured to measure a pressure ($P_C$) of the working chamber (24) in a state while the high-pressure valve (28) and the low-pressure valve (30) are closed, no reciprocal motion of the piston (22) takes place, and the initial pressure ($P_C$) of the working chamber (24) is at a pressure (P1) that corresponds to the pressure of a low-pressure line (14) of the hydraulic machine (20); and

a damage detecting part (102) configured to reduce the pressure ($P_H$) of the high-pressure line (12) and to detect a damage of the high-pressure valve (28) on the basis of an increase of the pressure ($P_C$) of the working chamber (28) measured by the pressure measuring part (72) while reducing the pressure ($P_H$) of the high-pressure line (12).

9. The diagnosis system (101) for a hydraulic machine (20) according to claim 8,
wherein the poppet (35) comprises:

a poppet body (65);
an inner ridge (60a) protruding toward the seat (46,46a) from the poppet body (65); and
an outer ridge (60b) disposed radially outside the inner ridge (60a) and protruding toward the seat (46,46b) from the poppet body (65),

wherein the high-pressure valve (28) is configured to cause the high-pressure line (12) and the working chamber (24) to be in a non-communicating state by the inner ridge (60a) and the outer ridge (60b) of the poppet (35) being in contact with the seat (46,46a,46b), in a state where the high-pressure valve (28) is closed,

wherein the pressure measuring part (72) is configured to measure the pressure ($P_C$) of the working chamber (24) while reducing a pressure ($P_H$) of the high-pressure line (12), in a state where the high-pressure valve (28) and the low-pressure valve (30) are closed, and

wherein the damage detecting part (102) is configured to detect a damage of the high-pressure valve (28) on the basis of a pressure value ($P_L$) of the high-pressure line (12) at the time of a start of the increase in the pressure ($P_C$) of the working chamber (24).

10. The diagnosis system (101) for a hydraulic machine (20) according to claim 9,

wherein the damage detecting part (102) is configured to detect occurrence of the damage of the high-pressure valve (28), such as a difference in an abrasion amount between the inner ridge (60a) and the outer ridge (60b) in the high-pressure valve (28), on the basis of a pressure ($P_L$) of the high-pressure line (12) at which the pressure ($P_C$) of the working chamber (24) begins to increase.

11. The diagnosis system (101) for a hydraulic machine (20) according to claim 9 or 10,

wherein the damage detecting part (102) is configured to evaluate a damage of the high-pressure valve (28), such as a degree of damage of the high-pressure valve (28) on the basis of the pressure value ($P_L$) of the high-pressure line (12) at the time of a start of an increase in the pressure ($P_C$) of the working chamber (24).

12. The diagnosis system (101) for a hydraulic machine (20) according to claim 8,

wherein the damage detecting part (102) is configured to determine that a damage exists in the high-pressure valve (28), on the basis of presence of an increase in the pressure ($P_C$) of the working chamber (24).

13. The diagnosis system (101) for a hydraulic machine (20) according to claim 8,

wherein the damage detecting part (102) is configured to detect a damage of the high-pressure valve (28) on the basis of a ratio of a change rate of the pressure ($P_C$) of the working chamber (24) to a difference between a pressure ($P_H$) of the high-pressure line (12) and the pressure ($P_C$) of the working chamber (24).

14. A hydraulic machine (20), comprising:

a rotor shaft (32);
a cylinder (21);

a piston (22) forming a working chamber (24) together with the cylinder (21);
a high-pressure valve (28) and a low-pressure valve (30) provided for the working chamber (24); and
the diagnosis system (101) for a hydraulic machine (20) according to any one of claims 8 to 13.

15. A renewable-energy type power generating apparatus (1), comprising:

a rotor (3) configured to receive renewable energy to rotate;
a hydraulic pump (8) configured to be driven by the rotor (3) to pressurize working oil;
a hydraulic motor (10) configured to be driven by the working oil pressurized by the hydraulic pump (8);
a high-pressure line (12) connecting an outlet of the hydraulic pump (8) and an inlet of the hydraulic motor (10);
a low-pressure line (14) connecting an outlet of the hydraulic motor (10) and an inlet of the hydraulic pump (8); and
a generator (16) configured to be driven by the hydraulic motor (10),
wherein at least one of the hydraulic pump (8) or the hydraulic motor (10) is the hydraulic machine (20) according to claim 14.

**Patentansprüche**

1. Ein Verfahren zum Diagnostizieren einer hydraulischen Maschine (20), die eine Rotorwelle (32), einen Zylinder (21), einen Kolben (22), der zusammen mit dem Zylinder (21) eine Arbeitskammer (24) bildet, und ein Hochdruckventil (28) sowie ein Niederdruckventil (30), die für die Arbeitskammer (24) vorgesehen sind, aufweist, und die konfiguriert ist, um eine Umwandlung zwischen einer Rotationsbewegung der Rotorwelle (32) und einer Hin- und Her-Bewegung des Kolbens (22) auszuführen,

wobei das Hochdruckventil (28) ein Tellerventil mit einem Sitz (46,46a,46b;46c) und einem Teller (35) aufweist, der konfiguriert ist, um in Kontakt mit dem Sitz (46,46a,46b;46c) von einer Seite einer Hochdruckleitung (12) der hydraulischen Maschine (20) zu sein,

wobei das Verfahren **dadurch gekennzeichnet ist, dass** es aufweist:

einen Schritt des Verringerns des Drucks ($P_H$) der Hochdruckleitung (12), und
einen Schritt des Messens eines Drucks ($P_C$) der Arbeitskammer (24) in einem Zustand, während das Hochdruckventil (28) und das Niederdruckventil (30) geschlossen sind, keine Hin- und Her-Bewegung des Kolbens (22) erfolgt, und der Anfangsdruck (P$_C$) der Arbeitskammer (24) sich bei einem Druck (P1) befindet, der dem Druck einer Niederdruckleitung (14) der hydraulischen Maschine (20) entspricht, und

einen Schritt des Erfassens einer Beschädigung des Hochdruckventils (28) auf der Basis eines Anstiegs des Drucks (P$_C$) der Arbeitskammer (24), während der Druck (P$_H$) der Hochdruckleitung (12) verringert wird.

2. Das Verfahren zum Diagnostizieren einer hydraulischen Maschine (20) gemäß Anspruch 1, wobei der Teller (35) aufweist:

einen Tellerkörper (65),
einen inneren Grat (60a), der zu dem Sitz (46,46a) von dem Tellerkörper (65) vorsteht, und
einen äußeren Grat (60b), der radial außerhalb des inneren Grats (60a) angeordnet ist und zu dem Sitz (46,46b) von dem Tellerkörper (65) vorsteht,
wobei das Hochdruckventil (28) konfiguriert ist, um zu bewirken, dass die Hochdruckleitung (12) und die Arbeitskammer (24) in einem Nicht-Verbindungszustand sind, indem der innere Grat (60a) und der äußere Grat (60b) des Tellers (35) in Kontakt mit dem Sitz (46,46a,46b) sind, in einem Zustand, wo das Hochdruckventil (28) geschlossen ist,
wobei der Schritt des Messens des Drucks ein Messen des Drucks (P$_C$) der Arbeitskammer (24) aufweist, während ein Druck der Hochdruckleitung (12) verringert wird, in einem Zustand, wo das Hochdruckventil (28) und das Niederdruckventil (30) geschlossen sind, und
wobei der Schritt des Erfassens einer Beschädigung ein Erfassen einer Beschädigung des Hochdruckventils (28) auf der Basis eines Druckwerts (P$_L$) der Hochdruckleitung (12) zu dem Zeitpunkt eines Beginns des Anstiegs des Drucks (P$_C$) der Arbeitskammer (24) aufweist.

3. Das Verfahren zum Diagnostizieren einer hydraulischen Maschine (20) gemäß Anspruch 2, ferner mit einem Schritt des Erfassens des Auftretens der Beschädigung des Hochdruckventils (28), wie eine Differenz in einem Abriebbetrag zwischen dem inneren Grat (60a) und dem äußeren Grat (60b) in dem Hochdruckventil (28), auf der Basis eines Druck der Hochdruckleitung (P$_L$), bei dem der Druck (P$_C$) der Arbeitskammer (24) anzusteigen beginnt.

4. Das Verfahren zum Diagnostizieren einer hydraulischen Maschine (20) gemäß Anspruch 2 oder 3, wobei der Schritt des Erfassens der Beschädigung ein Bewerten einer Beschädigung des Hochdruckventils (28) wie ein Schädigungsausmaß des Hochdruckventils (28) auf der Basis des Druckwerts (P$_L$) der Hochdruckleitung (12) zu der Zeit eines Beginns eines Anstiegs des Drucks (P$_C$) der Arbeitskammer (24) aufweist.

5. Das Verfahren zum Diagnostizieren einer hydraulischen Maschine (20) gemäß Anspruch 1, wobei der Schritt des Erfassens einer Beschädigung ein Bestimmen aufweist, dass eine Beschädigung in dem Hockdruckventil (28) vorliegt, auf der Basis eines Vorliegens eines Anstiegs in dem Druck (P$_C$) der Arbeitskammer (24).

6. Das Verfahren zum Diagnostizieren einer hydraulischen Maschine (20) gemäß Anspruch 1, wobei der Schritt des Erfassens einer Beschädigung ein Erfassen einer Beschädigung des Hochdruckventils (28) auf der Basis eines Verhältnisses einer Änderungsrate des Drucks (P$_C$) der Arbeitskammer (24) zu einer Differenz zwischen einem Druck (P$_H$) der Hochdruckleitung (12) und dem Druck (P$_C$) der Arbeitskammer (24) aufweist.

7. Das Verfahren zum Diagnostizieren einer hydraulischen Maschine (20) gemäß einem der Ansprüche 1 bis 6, ferner mit einem Schritt des, wenn eine Beschädigung des Hochdruckventils (28) in dem Beschädigungserfassungsschritt festgestellt wird, Bewirkens, dass der Zylinder (21) entsprechend dem Hochdruckventil (28) in einem inaktiven Zustand ist, bei dem keine Verdrängung erzeugt wird, oder des Ersetzens des Hochdruckventils (28).

8. Ein Diagnosesystem (101) für eine hydraulische Maschine (20), die eine Rotorwelle (32), einen Zylinder (21), einen Kolben (22), der zusammen mit dem Zylinder (21) eine Arbeitskammer (24) bildet, und ein Hochdruckventil (28) sowie ein Niederdruckventil (30), die für die Arbeitskammer (24) vorgesehen sind, aufweist, und die konfiguriert ist, um eine Umwandlung zwischen einer Rotationsbewegung der Rotorwelle (32) und einer Hin- und Her-Bewegung des Kolbens (22) auszuführen,
wobei das Hochdruckventil (28) ein Tellerventil mit einem Sitz (46,46a,46b;46c) und einem Teller (35) aufweist, der konfiguriert ist, um in Kontakt mit dem Sitz (46,46a,46b;46c) von einer Seite einer Hochdruckleitung (12) der hydraulischen Maschine (20) zu sein,
wobei das Diagnosesystem (101) **dadurch gekennzeichnet ist, dass** es aufweist:

ein Druckmessteil (72), das konfiguriert ist, um einen Druck (P$_C$) der Arbeitskammer (24) in einem Zustand zu messen, während das Hochdruckventil (28) und das Niederdruckventil (30) geschlossen sind, keine Hin- und Her-Bewegung des Kolbens (22) erfolgt, und der Anfangsdruck ($P_C$) der Arbeitskammer (24) sich bei einem Druck (P1) befindet, der dem Druck einer Niederdruckleitung (14) der hydraulischen Maschine (20) entspricht, und

ein Beschädigungserfassungsteil (102), das konfiguriert ist, um den Druck ($P_H$) der Hochdruckleitung (12) zu verringern und um eine Beschädigung des Hochdruckventils (28) auf der Basis eines Anstiegs des Drucks ($P_C$) der Arbeitskammer (24), der durch das Druckmessteil (72) gemessen wird, während der Druck ($P_H$) der Hochdruckleitung (12) verringert wird, zu erfassen.

9. Das Diagnosesystem (101) für eine hydraulische Maschine (20) gemäß Anspruch 8, wobei der Teller (35) aufweist:

einen Tellerkörper (65),
einen inneren Grat (60a), der zu dem Sitz (46,46a) von dem Tellerkörper (65) vorsteht, und
einen äußeren Grat (60b), der radial außerhalb des inneren Grats (60a) angeordnet ist und zu dem Sitz (46,46b) von dem Tellerkörper (65) vorsteht,
wobei das Hochdruckventil (28) konfiguriert ist, um zu bewirken, dass die Hochdruckleitung (12) und die Arbeitskammer (24) in einem Nicht-Verbindungszustand sind, indem der innere Grat (60a) und der äußere Grat (60b) des Tellers (35) in Kontakt mit dem Sitz (46,46a,46b) sind, in einem Zustand, wo das Hochdruckventil (28) geschlossen ist,
wobei das Druckmessteil (72) konfiguriert ist, um den Druck ($P_C$) der Arbeitskammer (24) zu messen, während ein Druck der Hochdruckleitung (12) verringert wird, in einem Zustand, wo das Hochdruckventil (28) und das Niederdruckventil (30) geschlossen sind, und
wobei das Beschädigungserfassungsteil (102) konfiguriert ist, um eine Beschädigung des Hochdruckventils (28) auf der Basis eines Druckwerts ($P_L$) der Hochdruckleitung (12) zu dem Zeitpunkt eines Beginns des Anstiegs des Drucks ($P_C$) der Arbeitskammer (24) zu erfassen.

10. Das Diagnosesystem (101) für eine hydraulische Maschine (20) gemäß Anspruch 9, wobei das Beschädigungserfassungsteil (102) konfiguriert ist, um das Auftreten der Beschädigung des Hochdruckventils (28), wie eine Differenz in einem Abriebbetrag zwischen dem inneren Grat (60a) und dem äußeren Grat (60b) in dem Hochdruckventil (28), auf der Basis eines Drucks ($P_L$) der Hochdruckleitung (12), bei dem der Druck ($P_C$) der Arbeitskammer (24) anzusteigen beginnt, zu erfassen.

11. Das Diagnosesystem (101) für eine hydraulische Maschine (20) gemäß Anspruch 9 oder 10, wobei das Beschädigungserfassungsteil (102) konfiguriert ist, um eine Beschädigung des Hochdruckventils (28) wie ein Schädigungsausmaß des Hochdruckventils (28) auf der Basis des Druckwerts ($P_L$) der Hochdruckleitung (12) zu der Zeit eines Beginns eines Anstiegs des Drucks (Pc) der Arbeitskammer (24) zu bewerten.

12. Das Diagnosesystem (101) für eine hydraulische Maschine (20) gemäß Anspruch 8, wobei das Beschädigungserfassungsteil (102) konfiguriert ist, um zu bestimmen, dass eine Beschädigung in dem Hochdruckventil (28) vorliegt, auf der Basis des Vorliegens eines Anstiegs in dem Druck ($P_C$) der Arbeitskammer (24).

13. Das Diagnosesystem (101) für eine hydraulische Maschine (20) gemäß Anspruch 8, wobei das Beschädigungserfassungsteil (102) konfiguriert ist, um eine Beschädigung des Hochdruckventils (28) auf der Basis eines Verhältnisses einer Änderungsrate des Drucks ($P_C$) der Arbeitskammer (24) zu einer Differenz zwischen einem Druck ($P_H$) der Hochdruckleitung (12) und dem Druck ($P_C$) der Arbeitskammer (24) zu erfassen.

14. Eine hydraulische Maschine (20) mit:

einer Rotorwelle (32),
einem Zylinder (21),
einem Kolben, der zusammen mit dem Zylinder (21) eine Arbeitskammer (24) bildet,
einem Hochdruckventil (28) und einem Niederdruckventil (30), die für die Arbeitskammer (24) vorgesehen sind, und
dem Diagnosesystem (101) für eine hydraulische Maschine (20) gemäß einem der Ansprüche 8 bis 13.

15. Eine Stromerzeugungsvorrichtung für erneuerbare Energie (1) mit:

einem Rotor (3), der konfiguriert ist, um erneuerbare Energie zur Drehung zu empfangen,
einer hydraulischen Pumpe (8), die konfiguriert ist, um durch den Rotor (3) zum Druckbeaufschlagen von Arbeitsöl angetrieben zu werden,
einem hydraulischen Motor (10), der konfiguriert ist, um durch das durch die hydraulische Pumpe (8) mit Druck beaufschlagte Arbeitsöl angetrieben zu werden,
einer Hochdruckleitung (12), die einen Auslass der hydraulischen Pumpe (8) und einen Einlass des hydraulischen Motors (10) verbindet,

einer Niederdruckleitung (14), die einen Auslass des hydraulischen Motors (10) und einen Einlass der hydraulischen Pumpe (8) verbindet, und

einem Generator (16), der konfiguriert ist, um durch den hydraulischen Motor (10) angetrieben zu werden,

wobei zumindest eine von der hydraulischen Pumpe (8) oder dem hydraulischen Motor (10) die hydraulische Maschine (20) gemäß Anspruch 14 ist.

## Revendications

1. Procédé pour établir un diagnostic sur une machine (20) hydraulique, qui comprend un arbre (32) de rotor, un cylindre (21), un piston (22) formant une chambre (24) de travail ensemble avec le cylindre (21), et une soupape (28) de haute pression et une soupape (30) de basse pression prévues pour la chambre (24) de travail, et qui est configurée pour effectuer une transformation entre un mouvement de rotation de l'arbre (32) du rotor et un mouvement alternatif du piston (22),

la soupape (28) de haute pression, comprenant une soupape en champignon, comportant un siège (46, 46a, 46b ; 46c) et un champignon (25) configuré pour être en contact avec le siège (46, 46a, 46b ; 46c) d'un côté d'une ligne (12) de haute pression de la machine (20) hydraulique,

le procédé étant **caractérisé en ce qu'**il comprend :

un stade de réduction de la pression ($P_H$) dans la ligne (12) de haute pression et

un stade de mesure d'une pression (Pc) dans la chambre (24) de travail dans un état, alors que la soupape (28) de haute pression et la soupape (30) de basse pression sont fermées, qu'il n'y a pas de mouvement alternatif du piston (12) et que la pression (Pc) initiale dans la chambre (24) de travail est à une pression (P1), qui correspond à la pression dans la ligne (14) de basse pression de la machine (20) hydraulique et un stade de détection d'un endommagement de la soupape (28) de haute pression sur la base d'une augmentation de la pression ($P_C$) dans la chambre (24) de travail, tout en réduisant la pression ($P_H$) dans la ligne (12) de haute pression.

2. Procédé d'établissement d'un diagnostic sur une machine (20) hydraulique suivant la revendication 1, dans lequel le champignon (25) comprend :

un corps (65) de champignon ;
une rainure (60a) intérieure, faisant saillie vers le siège (46, 46a) à partir du corps (65) du champignon et
une rainure (60b) extérieure, disposée radialement à l'extérieur de la rainure (60a) intérieure et faisant saillie vers le siège (46, 46b) à partir du corps (65) du champignon,

dans lequel la soupape (28) de haute pression est configurée pour faire que la ligne (12) de haute pression et la chambre (24) de travail soient dans un état de non communication, alors que la rainure (60a) intérieure et la rainure (60b) extérieure du champignon (35) sont en contact avec le siège (46, 46a, 46b), dans un état où la soupape (28) de haute pression est fermée,

dans lequel le stade de mesure de la pression comprend mesurer la pression ($P_C$) dans la chambre (24) de travail, tout en réduisant une pression dans la ligne (12) de haute pression dans un état où la soupape (28) de haute pression et la soupape (30) de basse pression sont fermées et

dans lequel le stade de détection d'un endommagement comprend détecter un endommagement de la soupape (28) de haute pression sur la base d'une valeur ($P_L$) de la pression dans la ligne (12) de haute pression à l'instant du début de l'augmentation de la pression ($P_C$) dans la chambre (24) de travail.

3. Procédé d'établissement d'un diagnostic sur une machine (20) hydraulique suivant la revendication 2, comprenant, en outre, un stade de détection de l'apparition de l'endommagement de la soupape (28) de haute pression, tel qu'une différence d'abrasion entre la rainure (60a) intérieure et la rainure (60b) extérieure de la soupape (28) de haute pression, sur la base d'une pression dans la ligne ($P_L$) à laquelle la pression ($P_C$) dans la chambre (24) de travail commence à augmenter.

4. Procédé d'établissement d'un diagnostic sur une machine (20) hydraulique suivant la revendication 2 ou 3,

dans lequel le stade de détection de l'endommagement comprend évaluer un endommagement de la soupape (28) de haute pression, tel qu'un degré d'endommagement de la soupape (28) de haute pression, sur la base de la valeur ($P_L$) de la pression dans la ligne (12) de haute pression à l'instant du début d'une augmentation de la pression ($P_C$) dans la chambre (24) de travail.

5. Procédé d'établissement d'un diagnostic sur une machine (20) hydraulique suivant la revendication 1 dans lequel le stade de détection d'un endommagement comprend déterminer qu'un endommagement existe dans la soupape (28) de haute pression, sur la base de la présence d'une augmentation de la pression ($P_C$) dans la chambre (24) de travail.

**6.** Procédé d'établissement d'un diagnostic sur une machine (20) hydraulique suivant la revendication 1, dans lequel le stade de détection d'un endommagement comprend détecter un endommagement de la soupape (28) de haute pression sur la base d'un rapport d'une vitesse de variation de la pression $(P_C)$ dans la chambre (24) de travail à une différence entre une pression $(P_H)$ dans la ligne (12) de haute pression et la pression $(P_C)$ dans la chambre (24) de travail.

**7.** Procédé d'établissement d'un diagnostic sur une machine (20) hydraulique suivant l'une quelconque des revendications 1 à 6, comprenant, en outre, un stade dans lequel, si l'on détecte un endommagement de la soupape (28) de haute pression dans le stade de détection d'un endommagement, on fait en sorte que le cylindre (21) correspondant à la soupape (28) de haute pression soit dans un état inactif ne produisant pas un déplacement ou on remplace la soupape (28) de haute pression.

**8.** Système (101) de diagnostic pour une machine (10) hydraulique, qui comprend un arbre (32) de rotor, un cylindre (21), un piston (22) formant une chambre (24) de travail ensemble avec le cylindre (21), et une soupape (28) de haute pression et une soupape (30) de basse pression prévues pour la chambre (24) de travail, et qui est configuré pour effectuer une transformation entre un mouvement de rotation de l'arbre (32) du rotor et un mouvement alternatif du piston (22),

la soupape (28) de haute pression, comprenant une soupape en champignon, comportant un siège (46, 46a, 46b ; 46c) et un champignon (25) configuré pour être en contact avec le siège (46, 46a, 46b ; 46c) d'un côté d'une ligne (12) de haute pression de la machine (20) hydraulique,

le système (101) de diagnostic étant **caractérisé en ce qu'**il comprend :

une partie (72) de mesure de pression, configurée pour mesurer une pression $(P_C)$ dans la chambre (24) de travail, dans un état, alors que la soupape (28) de haute pression et la soupape (30) de basse pression sont fermées, il n'y a pas de mouvement alternatif du piston (22) et la pression $(P_C)$ initiale dans la chambre (24) de travail a une pression (P1), qui correspond à la pression dans la ligne (14) de basse pression de la machine (20) hydraulique et

une partie (102) de détection d'un endommagement, configurée pour réduire la pression $(P_H)$ dans la ligne (12) de haute pression et pour détecter un endommagement de la soupape (28) de haute pression, sur la base d'une augmentation de la pression $(P_C)$ dans la chambre (24) de travail, mesurée par la partie (72) de mesure de pression, tout en réduisant la pression $(P_H)$ dans la ligne (12) de haute pression.

**9.** Système (101) de diagnostic pour une machine (20) hydraulique suivant la revendication 8, dans laquelle le champignon (35) comprend :

un corps (65) de champignon ; une rainure (60a) intérieure, faisant saillie vers le siège (46, 46a) à partir du corps (65) du champignon et une rainure (60b) extérieure, disposée radialement à l'extérieur de la rainure (60a) intérieure et faisant saillie vers le siège (46, 46b) à partir du corps (65) du champignon,

dans lequel la soupape (28) de haute pression est configurée pour faire que la ligne (12) de haute pression et la chambre (24) de travail soient dans un état de non communication, alors que la rainure (60a) intérieure et la rainure (60b) extérieure du champignon (35) sont en contact avec le siège (46, 46a, 46b), dans un état où la soupape (28) de haute pression est fermée,

dans lequel la partie (72) de mesure de pression est configurée pour mesurer la pression $(P_C)$ dans la chambre (24) de travail, tout en réduisant une pression $(P_H)$ dans la ligne (12) de haute pression, dans un état où la soupape (28) de haute pression et la soupape (30) de basse pression sont fermées et dans lequel la partie (102) de détection d'un endommagement est configurée pour détecter un endommagement de la soupape (28) de haute pression, sur la base d'une valeur $(P_L)$ de pression dans la ligne (12) de haute pression au moment d'un début de l'augmentation de la pression $(P_C)$ dans la chambre (24) de travail.

**10.** Système (101) de diagnostic pour une machine (20) hydraulique suivant la revendication 9, dans lequel la partie (102) de détection d'un endommagement est configurée pour détecter l'apparition de l'endommagement de la soupape (28) de haute pression, tel qu'une différence d'abrasion entre la rainure (60a) intérieure et la rainure (60b) extérieure de la soupape (28) de haute pression, sur la base d'une pression dans la ligne $(P_L)$ à laquelle la pression $(P_C)$ dans la chambre (24) de travail commence à augmenter.

**11.** Système (101) de diagnostic pour une machine (20) hydraulique suivant la revendication 9 ou 10, dans lequel la partie (102) de détection d'un endommagement est configurée pour évaluer un endommagement de la soupape (28) de haute pression, tel qu'un degré d'endommagement de la soupape (28) de haute pression, sur la base de la valeur $(P_L)$ de la pression dans la ligne (12) de haute pression à l'instant du début d'une augmentation de la pression ($P_C$) dans la chambre (24) de travail.

12. Système (101) de diagnostic pour une machine (20) hydraulique suivant la revendication 8, dans lequel la partie (102) de détection d'un endommagement est configurée pour déterminer qu'un endommagement existe dans la soupape (28) de haute pression, sur la base de la présence d'une augmentation de la pression ($P_C$) dans la chambre (24) de travail.

13. Système (101) de diagnostic pour une machine (20) hydraulique suivant la revendication 8, dans lequel la partie (102) de détection d'un endommagement est configurée pour détecter un endommagement de la soupape (28) de haute pression sur la base d'un rapport d'une vitesse de variation de la pression ($P_C$) dans la chambre (24) de travail à une différence entre une pression ($P_H$) dans la ligne (12) de haute pression et la pression ($P_C$) dans la chambre (24) de travail.

14. Machine (20) hydraulique, comprenant :

   un arbre (32) de rotor ;
   un cylindre (21) ;
   un piston (22) formant une chambre (24) de travail ensemble avec le cylindre (21) ;
   une soupape (28) de haute pression et une soupape (30) de basse pression prévues pour la chambre (24) de travail et
   le système (101) de diagnostic pour une machine (20) hydraulique suivant l'une quelconque des revendications 8 à 13.

15. Installation (1) de production de courant du type à énergie renouvelable, comprenant :

   un rotor (3), configuré pour recevoir de l'énergie renouvelable, afin de tourner ;
   une pompe (8) hydraulique, configurée pour être entraînée par le rotor (3), pour mettre de l'huile de travail sous pression ;
   un moteur (10) hydraulique, configuré pour être entraîné par l'huile de travail mise sous pression par la pompe (8) hydraulique ;
   une ligne (12) de haute pression, communiquant avec une sortie de la pompe (8) hydraulique et avec une entrée du moteur (10) hydraulique ;
   une ligne (14) de basse pression, communiquant avec une sortie du moteur (10) hydraulique et avec une entrée de la pompe (8) hydraulique et
   une génératrice (16), configurée pour être entraînée par le moteur (10) hydraulique,
   dans laquelle au moins l'un de la pompe (8) hydraulique ou du moteur (10) hydraulique est la machine (20) hydraulique suivant la revendication 14.

FIG. 1

# FIG. 2

FIG. 3                                                                                    101

## FIG. 4A

FIG. 4B

FIG. 5

FIG. 6

FIG. 7A

FIG. 7B

FIG. 7C

FIG. 8

LEAK PRESSURE P$_L$

GAP AMOUNT W$_D$

FIG. 9

RESISTANCE
AT ABRASION SECTION

GAP AMOUNT W$_D$

FIG. 10

FIG. 11

**EP 3 211 275 B1**

REFERENCES CITED IN THE DESCRIPTION

**Patent documents cited in the description**

- US 20100040470 A
- JP 2014533811 A
- US 2004167728 A1
- WO 2014024232 A1